# EUROPEAN PATENT APPLICATION

(11) **EP 4 550 744 A1**
(43) Date of publication of application: **07.05.2025**
(21) Application number: 23847028.0
(22) Date of filing: 27.07.2023
(51) Int. Cl.: H04L 41/0894, H04W 8/18, H04W 88/14, H04W 76/10

(54) **METHOD AND APPARATUS FOR UPDATING DATA USAGE IN WIRELESS COMMUNICATION SYSTEM**

(30) Priority: 28.07.2022 KR 20220094100
(71) Applicant: Samsung Electronics Co., Ltd., Suwon-si, Gyeonggi-do 16677 (KR)
(72) Inventor: SUH, Dongeun, Suwon-si, Gyeonggi-do 16677 (KR)
(74) Representative: Gulde & Partner
(86) International application number: PCT/KR2023/010970
(87) International publication number: WO 2024/025372

(57) **Abstract**

The present disclosure relates to a 5G or 6G communication system for supporting higher data transmission rates. The present invention suggests a method for requesting data usage updates from SMF/PCFs in charge of S-NSSAI/DNN when an access and mobility management function (AMF) receives a session creation request for same S-NSSAI/DNN, a method for requesting data usage updates from PCFs in charge of S-NSSAI/DNN when a unified data repository (UDR) receives a query request for same S-NSSAI/DNN, and a method for selecting same PCF for S-NSSAI and DNN.

## Description

### [Technical Field]

The disclosure relates to a wireless communication system, and more particularly, to a method and device for updating data usage.

### [Background Art]

5G mobile communication technology defines a wide frequency band to enable a fast transmission speed and new services, and may be implemented not only in a frequency ('sub 6 GHz') band of 6 GHz or less such as 3.5 GHz, but also in an ultra high frequency band ('above 6 GHz') called a mmWave such as 28 GHz and 39 GHz. Further, in the case of 6G mobile communication technology, which is referred to as a beyond 5G system, in order to achieve a transmission speed that is 50 times faster than that of 5G mobile communication technology and ultra-low latency reduced to 1/10 compared to that of 5G mobile communication technology, implementations in terahertz bands (e.g., such as 95 GHz to 3 terahertz (3 THz) band) are being considered.

In the early days of 5G mobile communication technology, with the goal of satisfying the service support and performance requirements for an enhanced mobile broadband (eMBB), ultra-reliable low-latency communications (URLLC), and massive machine-type communications (mMTC), standardization has been carried out for beamforming and massive multi-input multi-output (MIMO) for mitigating a path loss of radio waves in an ultra-high frequency band and increasing a propagation distance of radio waves, support for various numerologies (multiple subcarrier spacing operation, and the like) for efficient use of ultra-high frequency resources and dynamic operation for slot formats, initial access technology for supporting multi-beam transmission and broadband, a definition and operation of a band-width part (BWP), a new channel coding method such as low density parity check (LDPC) code for large capacity data transmission and polar code for high reliable transmission of control information, L2 pre-processing, and network slicing that provides a dedicated network specialized for specific services.

Currently, discussions are ongoing to improve initial 5G mobile communication technology and enhance a performance thereof in consideration of services in which 5G mobile communication technology was intended to support, and physical layer standardization for technologies such as vehicle-to-everything (V2X) for helping driving determination of an autonomous vehicle and increasing user convenience based on a location and status information of the vehicle transmitted by the vehicle, new radio unlicensed (NR-U) for the purpose of a system operation that meets various regulatory requirements in unlicensed bands, NR UE power saving, a non-terrestrial network (NTN), which is direct UE-satellite communication for securing coverage in regions where communication with a terrestrial network is impossible, and positioning is in progress.

Further, standardization in the field of air interface architecture/protocol for technologies such as industrial Internet of things (IIoT) for supporting new services through linkage and convergence with other industries, integrated access and backhaul (IAB) that provides nodes for expanding network service regions by integrating wireless backhaul links and access links, mobility enhancement including conditional handover and dual active protocol stack (DAPS) handover, and 2-step RACH for NR that simplifies a random access procedure is also in progress, and standardization in the field of system architecture/service for 5G baseline architecture (e.g., service based architecture, service based interface) for applying network functions virtualization (NFV) and software-defined networking (SDN) technologies, mobile edge computing (MEC) that receives services based on a location of a UE, and the like is also in progress.

When such a 5G mobile communication system is commercialized, connected devices in an explosive increase trend will be connected to communication networks; thus, it is expected that function and performance enhancement of a 5G mobile communication system and integrated operation of connected devices will be required. To this end, new research on eXtended reality (XR) for efficiently supporting augmented reality (AR), virtual reality (VR), mixed reality (MR), and the like, 5G performance improvement and complexity reduction using artificial intelligence (AI) and machine learning (ML), AI service support, metaverse service support, and drone communication will be conducted.

Further, the development of such a 5G mobile communication system will be the basis for the development of full duplex technology for improving frequency efficiency and system network of 6G mobile communication technology, satellite, artificial intelligence (AI)-based communication technology that utilizes AI from a design stage and that realizes system optimization by internalizing end-to-end AI support functions, and next generation distributed computing technology that realizes complex services beyond the limits of UE computing capabilities by utilizing ultra-high performance communication and computing resources as well as a new waveform for ensuring coverage in a terahertz band of 6G mobile communication technology, full dimensional MIMO (FD-MIMO), multi-antenna transmission technologies such as an array antenna and large scale antenna, metamaterial-based lenses and antennas for improving coverage of terahertz band signals, high-dimensional spatial multiplexing technology using orbital angular momentum (OAM), and reconfigurable intelligent surface (RIS) technology.

### [Disclosure]

### [Technical Problem]

The disclosure provides a method and device for updating data usage for efficiently deriving a remaining allowed usage value even in a situation where there are multiple PDU sessions corresponding to S-NSSAI and DNN and where there are multiple SMFs and PCFs in charge of the corresponding PDU sessions in a wireless communication system.

### [Technical Solution]

According to the disclosure, a method of operating a first session management function (SMF) in a wireless communication system includes receiving, from an access and mobility management function (AMF), an SM context creation request message; transmitting, to a first policy control function (PCF), a policy creation request message based on the SM context creation request message; and receiving, from the first PCF, a first response message to the policy creation request message.

According to the disclosure, a first SMF in a wireless communication system includes a transceiver; and a processor coupled with the transceiver. The processor receives, from an AMF, an SM context creation request message, transmits, to a first PCF, a policy creation request message based on the SM context creation request message, and receives, from the first PCF, a first response message to the policy creation request message.

The SM context creation request message may be generated based on a first response message transmitted from a second SMF to the AMF.

The first response message may include information indicating whether an update on data usage of the terminal has been completed in the second SMF.

The first response message may be generated based on a second response message transmitted from a second PCF to the second SMF.

The second response message may include information indicating whether an update on data usage of the terminal has been completed in the second PCF.

The second response message may be generated based on a third response message transmitted from a unified data repository (UDR) to the second PCF.

The third response message may include information indicating whether an update on data usage of the terminal has been completed in the UDR.

The third response message may be generated based on an update request message transmitted from the second PCF to the UDR.

The update request message may include information instructing to update data usage of the terminal.

The update request message may be generated based on a policy update request message transmitted from the second SMF to the second PCF.

The policy update request message may include information instructing to update data usage of the terminal.

The policy update request message may be generated based on an SM context update request message transmitted from the AMF to the second SMF.

The SM context update request message may include at least one of S-NSSAI, DNN, report indication, per S-NSSAI/DNN report indication, PDU session ID, or SM context ID.

The SM context request message may be generated based on a PDU session establishment request message transmitted from the terminal to the AMF.

The PDU session establishment request message may include at least one of S-NSSAI, DNN, or PDU session ID.

The first response message may be generated based on a fourth response message transmitted from a UDR to the first PCF.

The fourth response message may include at least one of remaining allowed usage corresponding to an UE ID, DNN, or S-NSSAI.

The fourth response message may be generated based on a query request message transmitted from the first PCF to the UDR.

The query request message may be generated based on the policy creation request message.

### [Advantageous Effects]

A method and device for updating data usage in a wireless communication system according to the disclosure have the effect of efficiently deriving a remaining allowed usage value even in a situation where there are multiple PDU sessions corresponding to S-NSSAI and DNN and where there are multiple SMFs and PCFs in charge of the corresponding PDU sessions.

### [Description of Drawings]

FIG. 1 is a conceptual diagram illustrating a wireless communication system 10 according to the disclosure.

FIG. 2 is a message flow diagram illustrating a procedure for performing a data usage update on SMFs 610 and 620/PCFs 710 and 720 in charge of the same S-NSSAI/DNN when an AMF 500 receives a session creation request for S-NSSAI/DNN in a PDU session creation procedure in a wireless communication system 10 according to the disclosure.

FIG. 3 is a message flow diagram illustrating a procedure for requesting a data usage update on PCFs 710 and 720 in charge of the same S-NSSAI/DNN when a UDR 1100 receives a query request for S-NSSAI/DNN in a PDU session creation procedure in a wireless communication system 10 according to the disclosure.

FIG. 4 is a message flow diagram illustrating a procedure for storing an ID of a PCF 700 selected by an AMF 500 in a PDU session creation procedure in a wireless communication system 10 according to the disclosure.

FIG. 5 is a message flow diagram illustrating a procedure for selecting the same PCF 700 for S-NSSAI/DNN based on information received from an AMF 500 by an SMF 600 in a PDU session creation procedure in a wireless communication system 10 according to the disclosure.

FIG. 6 is a block diagram illustrating a terminal 100 in a wireless communication system 10 according to the disclosure.

FIG. 7 is a block diagram illustrating network entities 200, 300, 400, 500, 600, 700, 800, 900, 1000, 1100, 1500, 1600, and 1700 in a wireless communication system 10 according to the disclosure.

### [Mode for Disclosure]

Hereinafter, preferred embodiments of the disclosure will be described in detail with reference to the attached drawings. In this case, it should be noted that in the attached drawings, identical components are indicated by identical symbols whenever possible. Further, detailed descriptions of well-known functions and constitutions that may obscure the gist of the disclosure will be omitted.

In describing embodiments in this specification, descriptions of technical contents that are well known in the technical field to which the disclosure pertains and that are not directly related to the disclosure will be omitted. This is to more clearly convey the gist of the disclosure without obscuring the gist of the disclosure by omitting unnecessary description.

For the same reason, some components are exaggerated, omitted, or schematically illustrated in the accompanying drawings. Further, the size of each component does not fully reflect the actual size. In each drawing, the same reference numerals are given to the same or corresponding components.

Advantages and features of the disclosure, and a method of achieving them will become apparent with reference to the embodiments described below in detail in conjunction with the accompanying drawings. However, the disclosure is not limited to the embodiments disclosed below, but may be implemented in various different forms, and only embodiments of the disclosure enable the disclosure to be complete, and are provided to fully inform the scope of the disclosure to those of ordinary skill in the art to which the disclosure belongs, and the disclosure is only defined by the scope of the claims. Like reference numerals refer to like components throughout the specification.

In this case, it will be understood that each block of message flow diagrams and combinations of the message flow diagrams may be performed by computer program instructions. Because these computer program instructions may be mounted in a processor of a general purpose computer, special purpose computer, or other programmable data processing equipment, the instructions performed by a processor of a computer or other programmable data processing equipment generate a means that performs functions described in the message flow diagram block(s). Because these computer program instructions may be stored in a computer usable or computer readable memory that may direct a computer or other programmable data processing equipment in order to implement a function in a particular manner, the instructions stored in the computer usable or computer readable memory may produce a production article containing instruction means for performing the function described in the message flow diagram block(s). Because the computer program instructions may be mounted on a computer or other programmable data processing equipment, a series of operation steps are performed on the computer or other programmable data processing equipment to generate a computer-executable process; thus, instructions for performing the computer or other programmable data processing equipment may provide steps for performing functions described in the message flow diagram block(s).

Further, each block may represent a portion of a module, a segment, or a code including one or more executable instructions for executing a specified logical function(s). Further, it should be noted that in some alternative implementations, functions recited in the blocks may occur out of order. For example, two blocks illustrated one after another may in fact be performed substantially simultaneously, or the blocks may be sometimes performed in the reverse order according to the corresponding function.

In this case, the term '-unit' used in this embodiment means software or hardware components such as field programmable gate array (FPGA) or application specific integrated circuit (ASIC), and '-unit' performs certain roles. However, '-unit' is not limited to software or hardware. '-unit' may be constituted to reside in an addressable storage medium or may be constituted to reproduce one or more processors. Therefore, as an example, '-unit' includes components such as software components, object-oriented software components, class components, and task components, processes, functions, properties, procedures, subroutines, segments of program code, drivers, firmware, microcode, circuit, data, databases, data structures, tables, arrays, and variables. Functions provided in the components and '-units' may be combined into a smaller number of components and '-units' or may be further separated into additional components and '-units'. Further, components and '-units' may be implemented to reproduce one or more CPUs in a device or secure multimedia card.

Hereinafter, the base station is a subject performing resource allocation of the terminal and may be at least one of a node B, a base station (BS), an eNode B (eNode B), a gNode B (gNB), a radio access unit, a base station controller, or a node on the network. The terminal may include a user equipment (UE), a mobile station (MS), a cellular phone, a smart phone, a computer, or a multimedia system capable of performing a communication function. Further, the embodiment of the disclosure may be applied to other communication systems having a similar technical background or channel type to the embodiment of the disclosure described below. Further, the embodiments of the disclosure may be applied to other communication systems through some modifications within a range that does not significantly depart from the scope of the disclosure by determination of a person having skilled technical knowledge.

A term for identifying an access node used in the following description, a term referring to a network entity or a network function (NF), a term referring to messages, a term referring to an interface between network objects, and terms referring to various identification information are exemplified for convenience of description. Accordingly, the disclosure is not limited to the terms described below, and other terms referring to an object having an equivalent technical meaning may be used.

Hereinafter, for convenience of description, some terms and names defined in the 3rd generation partnership project long term evolution (3GPP) standard may be used. However, the disclosure is not limited by the above terms and names, and may be equally applied to systems conforming to other standards.

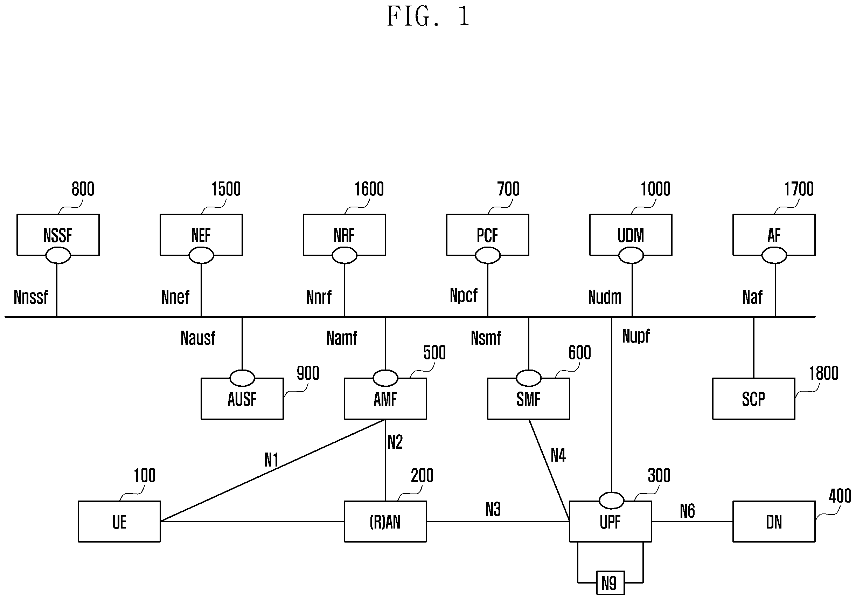

FIG. 1 is a conceptual diagram illustrating a wireless communication system 10 according to the disclosure.

With reference to FIG. 1, network entities or network nodes constituting the wireless communication system 10 are described as follows.

A (radio) access network ((R)AN) 200 is a subject performing radio resource allocation of a terminal 100, and may be at least one of an eNode B, a node B, a base station (BS), a NextGeneration radio access network (NG-RAN), a 5G-AN, a wireless access unit, a base station controller, or a node on a network. The terminal 100 may include a user equipment (UE), a NextGeneration UE (NG UE), a mobile station (MS), a cellular phone, a smartphone, a computer, or a multimedia system capable of performing a communication function. Further, although embodiments of the disclosure are described below using a 5G system as an example, the embodiments of the disclosure may be applied to other communication systems having a similar technical background. Further, the embodiments of the disclosure may be applied to other communication systems through some modifications within a range that does not significantly deviate from the scope of the disclosure by the determination of a person having skilled technical knowledge.

While a wireless communication system evolves from a 4G system to a 5G system, a NextGen core (NG Core) or 5G core network (5GC), which is a new core network, is defined. The new core network virtualizes all existing network entities (NEs) to create network functions (NFs). According to an embodiment of the disclosure, an NF may mean a network entity, a network component, or a network resource.

According to the disclosure, 5GC may include NFs 300, 400, 500, 600, 700, 800, 900, 1000, 1500, 1600, 1700, and 1800 illustrated in FIG. 1. The disclosure is not limited to the example illustrated in FIG. 1, and the 5GC may include a greater number of NFs or a fewer number of NFs than those illustrated in FIG. 1.

According to the disclosure, an access and mobility management function (AMF) 500 may be an NF of managing the mobility of the UE 100.

According to the disclosure, a session management function (SMF) 600 may be an NF of managing a packet data network (PDN) connection provided to the UE 100. The PDN connection may be referred to as a packet data unit (PDU) session.

According to the disclosure, a policy control function (PCF) 700 may be an NF of applying a mobile communication service provider's service policy and charging policy to the UE 100, and policy for a PDU session.

According to the disclosure, a unified data management (UDM) 1000 may be an NF of storing information on subscribers.

According to the disclosure, a network exposure function (NEF) 1500 may be a function of providing information on the UE 100 to a server outside the 5G network. Further, the NEF 1500 may provide a function of providing information necessary for a service to the 5G network and storing the information in a UDR (not illustrated).

According to the disclosure, a user plane function (UPF) 300 may be a function of performing the role of a gateway that transmits user data (PDU) to a data network (DN) 400.

According to the disclosure, a network repository function (NRF) 1600 may perform a function of discovering an NF.

According to the disclosure, an authentication server function (AUSF) 900 may perform UE authentication in a 3GPP access network and a non-3GPP access network.

According to the disclosure, a network slice selection function (NSSF) 800 may perform a function of selecting a network slice instance provided to the UE 100.

According to the disclosure, the data network (DN) 400 may be a data network in which the UE 100 transmits and receives data in order to use a network operator's service or a third party service.

In a 5G system, a PDU session capable of transmitting and receiving traffic may be created for a specific DNN (i.e., data network name) and S-NSSAI (i.e., network slice identifier). In a 5G system, the PCF 700 periodically receives a report of data usage for S-NSSAI and DNN for each UE from the SMF 600, and updates remaining allowed usage for S-NSSAI and DNN for each UE based on the report. Further, the PCF 700 that determines a policy for a session determines the policy for the session with reference to the remaining allowed usage for the corresponding S-NSSAI and DNN in a PDU session creation procedure. For example, in the case that the remaining allowed usage is almost zero, the PCF 700 may not create a QoS flow for the corresponding PDU session or may select a very low quality QoS parameter so that the remaining allowed usage does not fall below 0.

In a situation where there are multiple PDU sessions for S-NSSAI and DNN, a update on remaining allowed usage is performed independently for each PDU session, and in the case that a new PDU session creation procedure is performed for the corresponding S-NSSAI and DNN, a method of enabling the remaining allowed usage referenced by the PCF 700 to be maintained to the latest value is required. That is, a method of enabling data usage for other existing PDU sessions to be always reflected is required.

The disclosure provides technology for efficiently updating remaining allowed usage to the latest value in the wireless communication system 10.

In a situation where there are multiple PDU sessions for S-NSSAI and DNN (e.g., in the case of an SSC mode 3 PDU session, when a change in the user plane function (UPF) in charge of the PDU session is required, a new PDU session that may replace the corresponding PDU session may be created first and the existing PDU session may be released), in the case that a update on remaining allowed usage is independently performed for each PDU session and that a new PDU session creation procedure is performed for the corresponding S-NSSAI and DNN, a method of enabling the remaining allowed usage referenced by the PCF 700 to be maintained to the latest value is required. That is, a method of enabling data usage for other existing PDU sessions to be always reflected is required.

The disclosure proposes a method of requesting a data usage update to SMFs 600/PCFs 700 in charge of the same S-NSSAI/DNN when the AMF 500 receives a session creation request for S-NSSAI/DNN, a method of requesting a data usage update to PCFs 700 in charge of the same S-NSSAI/DNN when a unified data repository (UDR) 1100 receives a query request for S-NSSAI/DNN, and a method of selecting the same PCF 700 for S-NSSAI and DNN.

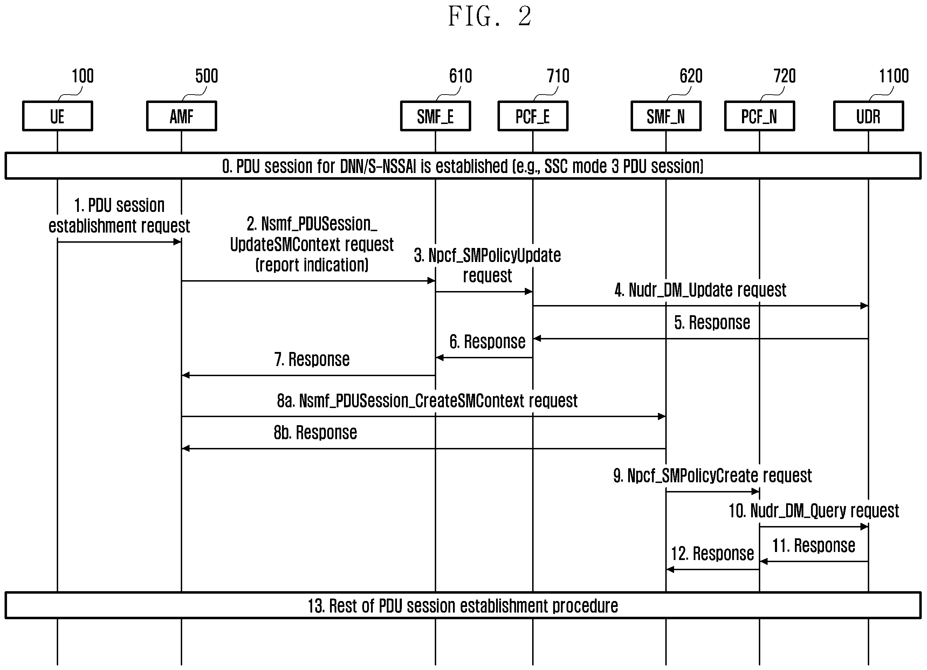

FIG. 2 is a message flow diagram illustrating an operation of requesting a data usage update to SMFs 610 and 620/PCFs 710 and 720 in charge of the same S-NSSAI/DNN when an AMF 500 receives a session creation request for S-NSSAI/DNN in a wireless communication system 10 according to the disclosure.

At step 0, there may be one or more PDU sessions already established with a specific DNN and S-NSSAI. For example, a PDU session for the same DNN/S-NSSAI as that of an SSC mode 3 PDU session may be established.

At step 1, the UE 100 may transmit a PDU session establishment request message to the AMF 500 through the RAN 200. The AMF 500 may receive the PDU session establishment request message from the UE 100 through the RAN 200. The PDU session establishment request message may include S-NSSAI, DNN, and PDU session ID.

For example, in the case of an SSC mode 3 procedure (i.e., a procedure for creating a new PDU session to replace an old PDU session because a change in anchor UPF is required for the old PDU session), the PDU session establishment request message may include an old PDU session ID. The old PDU session ID may indicate identifier information on the existing PDU session established with the same S-NSSAI and DNN as those included in the PDU session establishment request message.

At step 2, the AMF 500 may transmit an SM context update request message (Nsmf_PDUSession_UpdateSMContext request (report indication)) to an SMF_E 610. The SMF_E 610 may receive the SM context update request message from the AMF 500.

For example, if there are already established PDU sessions having the same S-NSSAI and DNN as those included in the PDU session establishment request message received at step 1, or if the PDU session establishment request message received at step 1 includes an old PDU session ID and has received an SMF relocation indication (i.e., information indicating that an SMF change is required) before step 1, the AMF 500 may determine to transmit an SM context update request message (Nsmf_PDUSession_UpdateSMContext request (report indication)) instructing to update data usage up to now to a PCF_E 710 to the SMFs 610 (i.e., SMF_E 610, indicating the SMF in charge of the existing PDU session) in charge of the corresponding PDU sessions (i.e., PDU sessions having the same S-NSSAI and DNN and managed by SMFs 610 different from an SMF 620 to be in charge of a new PDU session). In this case, in the case that there are multiple SMF_Es 610 in charge of PDU sessions, the AMF 500 may transmit a PDU session update request message to each SMF_E 610. The SM context update request message may include at least one of the following information:

S-NSSAI, DNN: The same S-NSSAI and DNN as those included in the PDU session request message received at step 1 may be included.

Report indication: Information instructing to transmit a message reporting data usage up to now to the SMF_E 610 to the PCF_E 710. Further, in the case that there is(are) an SM policy association ID(s) for PDU sessions requiring update, which is information received by the AMF 500 before step 1 in the report indication, the report indication may include corresponding information.

If a message from the AMF 500 includes a report indication, the SMF_E 610 may transmit a message reporting data usage up to now for a target of the usage update request to the PCF_E 710. The SMF_E 610 may identify information on the target of the usage update request through the S-NSSAI and DNN or SM policy association ID included in the SM context update request message received from the AMF 500, or through the SM policy association ID included in the report indication.

Per S-NSSAI/DNN report indication: It is optional information transmitted together with the report indication, and in the case that the same SMF_E 610 has multiple PDU sessions for the S-NSSAI and DNN, in order to reduce a signaling load, the AMF 500 may transmit only one request including per S-NSSAI/DNN report indication to the corresponding SMF_E 610. For example, the AMF 500 may not transmit a message for each session.

PDU Session ID: It may be an identifier for a PDU session having the same S-NSSAI and DNN as those included in the PDU session establishment request message received at step 1.

SM context ID: It may be an identifier that identifies a connection established in advance between the corresponding AMF and SMF in order to transmit and receive information on a PDU session having the same S-NSSAI and DNN as those included in the PDU session establishment request message received at step 1.

At step 3, the SMF_E 610 may transmit a policy update request message (Npcf_SM PolicyUpdate Request) to the PCF_E 710. The PCF_E 710 may receive the policy update request message from the SMF_E 610.

For example, in the case that the PDU session update request message received at step 2 includes a report indication, the SMF_E 610 may include aggregated data usage (i.e., data usage up to now after the last update to the PCF) for the PDU session established for S-NSSAI and DNN included in the PDU session update request message received at step 2 in the policy update request message transmitting to the PCF_E 710. For this purpose, the SMF_E 610 may request an update to the UPF 300.

The SMF_E 610 may identify the PCF_E 710 in charge of the corresponding PDU session and SM policy association ID (an identifier that identifies a connection for the SMF to exchange information on the corresponding PDU session with the corresponding PCF) based on information included in the PDU session update request message received at step 2 (e.g., PDU session ID, SM context ID, or S-NSSAI and DNN), and transmit a policy update request message to the corresponding PCF_E 710.

In the case that there is a per S-NSSAI/DNN report indication in the PDU session update request message received at step 2, the SMF_E 610 may identify SM policy association IDs for PDU sessions to be monitored among all PDU sessions for S-NSSAI and DNN in which it is in charge of, and transmit a message for each SM policy association ID to PCF(s) in charge of the corresponding SM policy association IDs.

For example, a policy update request message transmitted to the PCF_E 710 may include at least one of aggregated data usage, S-NSSAI, DNN, UE ID, or SM policy association ID.

At step 4, the PCF_E 710 may transmit an update request message (Nudr_DM_Update request) to the UDR 1100. The UDR 1100 may receive the update request message from the PCF_E 710.

For example, if the policy update message received from the SMF_E 610 at step 3 includes aggregated data usage, the PCF_E 710 may identify a UE identifier (i.e., UE ID) based on information included in the policy update message received from the SMF_E 610 at step 3. The SMF_E 610 may update remaining allowed usage corresponding to the S-NSSAI and DNN received at step 3 for the corresponding UE corresponding to the identified UE identifier. The PCF_E 710 may calculate a value obtained by subtracting the aggregated data usage value received at step 3 from the existing remaining allowed usage values for the UE ID, S-NSSAI, and DNN as a new remaining allowed usage value for the UE ID, S-NSSAI, and DNN and store the value. Further, the PCF_E 710 may include aggregated data usage in an update request message transmitting to the UDR 1100 instead of directly updating the remaining allowed usage value and including a new remaining allowed usage value. In this case, the PCF_E 710 may store the remaining allowed usage value included in the response message received from the UDR 1110 at step 5 as a new remaining allowed usage value. The PCF_E 710 may transmit an update request message for updating the remaining allowed usage value to the UDR 1100 storing remaining allowed usage for the UE ID, S-NSSAI, and DNN. The update request message may include at least one of S-NSSAI, DNN, UE ID, new remaining allowed usage, or aggregated data usage.

At step 5, the UDR 1100 may transmit a response message to the PCF_E 710. The PCF_E 710 may receive the response message from the UDR 1100.

For example, if the update request message received at step 4 includes remaining allowed usage or aggregated data usage, or both, the UDR 1110 may update the remaining allowed usage corresponding to the UE ID, S-NSSAI, and DNN received at step 4.

The UDR 1110 may store the remaining allowed usage received at step 4 as a new remaining allowed usage value.

In this case, in the case that the remaining allowed usage received at step 4 is different from a value obtained by subtracting the aggregated data usage value received at step 4 from the remaining allowed usage stored by the UDR 1110, the value obtained by subtracting the aggregated data usage value received at step 4 from the remaining allowed usage stored by the UDR 1110 may be stored as the remaining allowed usage. In this case, the response message transmitted to the PCF_E 710 in response to the update request message received at step 4 may include new remaining allowed usage.

The UDR 1110 may include information indicating whether the update was successful in the response message and new remaining allowed usage.

At step 6, the PCF_E 710 may transmit a response message to the SMF_E 610. The SMF_E 610 may receive the response message from the PCF_E 710. For example, the PCF_E 710 may transmit a response message including information indicating whether the update was successful to the SMF_E 610 in response to the policy update request message received at step 3 based on the information indicating whether the update was successful, received at step 5.

At step 7, the SMF_E 610 may transmit a response message to the AMF 500. The AMF 500 may receive the response message from the SMF_E 610. For example, the SMF_E 610 may transmit a response message including information indicating whether the update was successful to the AMF 500 in response to the PDU session update request message received from the AMF 500 at step 2 based on the information indicating whether the update was successful, received at step 6.

At step 8a, the AMF 500 may transmit an SM context creation request message (Nsmf_PDUSession_CreateSMContext request) to the SMF_N 620. The SMF_N 620 may receive the SM context creation request message from the AMF 500.

For example, the AMF 500 may select the SMF_N 620 (indicating an SMF to be in charge of a new PDU session) to be in charge of a new PDU session corresponding to S-NSSAI and DNN included in PDU session establishment request message received at step 1. If the AMF 500 has received an old PDU session ID at step 1 and received SMF relocation indication (i.e., information indicating that an SMF change is required) before step 1, the AMF 500 may select a new SMF_N 620 different from the SMF_E 610 in charge of a PDU session corresponding to the old PDU session ID. The AMF 500 may transmit an SM context creation request message to the selected SMF_N 620. For example, the SM context creation request message may include at least one of an UE ID, S-NSSAI, DNN, or PDU session ID.

At step 8b, the SMF_N 620 may transmit a response message to the AMF 500. The AMF 500 may receive the response message from the SMF_N 620. For example, the SMF_N 620 may request and receive session related subscription information to and from the UDM 1000 based on the UE ID received at step 8a. The SMF_N 620 may create an SM context and SM context ID based on the received session related subscription information.

The SMF_N 620 may transmit a response message including the result (i.e., success or failure) of the request at step 8a and SM context ID to the AMF 500.

At step 9, the SMF_N 620 may transmit an SM policy creation request message to the PCF_N 720. The PCF_N 720 may receive an SM policy creation request message from the SMF_N 620. The SMF_N 620 may select a PCF for transmitting the SM policy request message. For example, in the case that the SM context creation request message received from the AMF 500 at step 8a includes a PCF ID or information indicating to select the same PCF for the same S-NSSAI and DNN (or in the case that the SM context creation request message is stored as preconfigured information), the SMF_N 620 may select a PCF based on the corresponding information. For example, the same PCF as the PCF_E 610 may be selected (i.e., the PCF_N 720 and the PCF_E 710 are the same).

The SMF_N 620 may transmit an SM policy creation request message for SM policy creation to the selected PCF (i.e., PCF_N 720).

Although not illustrated in FIG. 2, the SMF_N 620 may perform the following procedure before transmitting an SM policy request message for SM policy creation to the PCF_N 720. When, among PDU sessions in which the SMF_N 620 is in charge of, PDU sessions corresponding to the same S-NSSAI and DNN as those included in the SM context creation request message received at step 8a already exist, and in the case that the PCF(s) for the corresponding PDU sessions are different from the selected PCF_N 720, the SMF_N 620 may transmit aggregated data usage (i.e., data usage up to now after the last update to the PCF) for the corresponding PDU sessions to the corresponding PCF_N 720 to update data usage. The PCF_N 720 may receive a message including aggregated data usage from the SMF_N 620. The PCF_N 720 may transmit an update request message (Nudr_DM_Update request) including at least one of aggregated data usage or newly calculated remaining allowed usage to the UDR 1100. The UDR 1100 may receive the update request message from the PCF_N 720. The UDR 1100 may update remaining allowed usage corresponding to the UE ID, S-NSSAI, and DNN stored in the UDR 1100 based on the update request message.

At step 10, the PCF_N 720 may transmit a query request message (Nudr_DM_Query request) to the UDR 1110. The UDR 1110 may receive the query request message from the PCF_N 720. For example, the PCF_N 720 may transmit a query request message for requesting remaining allowed usage corresponding to the UE ID, DNN, and S-NSSAI received at step 9 to the UDR 1110.

Although not illustrated in FIG. 2, the PCF_N 720 may perform the following procedure before transmitting a query request message for requesting remaining allowed usage corresponding to the UE ID, DNN, and S-NSSAI to the UDR 1100.

In the case that there are PDU sessions that do not receive an SM policy creation request message for data usage update from the SMF_N 620 at step 9 among PDU sessions that the PCF_N 720 is in charge of, and among SM policies (or PDU sessions) corresponding to the same S-NSSAI and DNN as those included in the SM policy creation request message received from step 9, the PCF_N 720 may transmit a message requesting to update data usage to SMFs in charge of the corresponding PDU sessions. For example, the message requesting to update data usage may include an SM policy association ID, S-NSSAI, DNN, and usage report information (information indicating to immediately report data usage). Each SMF may receive a message requesting to update data usage from the PCF_N 720. Each SMF may transmit a response message including aggregated data usage in response to the message requesting to update data usage to the PCF_N 720. The PCF_N 720 may receive a response message including aggregated data usage from each SMF.

At step 11, the UDR 1110 may transmit a response message to the PCF_N 720. The PCF_N 720 may receive the response message from the UDR 1110. For example, the UDR 1100 may transmit a response message including remaining allowed usage corresponding to the UE ID, DNN, and S-NSSAI included in the query request message received at step 10 to the PCF_N 720.

The PCF_N 720 may determine a session related policy (e.g., QoS parameters) corresponding to the SM policy request received at step 9 based on the received remaining allowed usage.

For example, the UDR 1110 may maintain a latest remaining allowed usage value through the remaining allowed usage update procedure performed at steps 2 to 7, and the remaining allowed usage update procedure performed at steps 9 and 10. The PCF_N 720 may determine a session related policy based on the latest remaining allowed usage value received from the UDR 1100.

At step 12, the PCF_N 720 may transmit a response message to the SMF_N 620. The SMF_N 620 may receive the response message from the PCF_N 720. The PCF_N 720 may transmit a response message including the result (i.e., success or failure) of the request, SM policy association ID, and session related policy information in response to the SM policy creation message received at step 9 to the SMF_N 620.

At step 13, a PDU session establishment procedure may be performed in the UE 100, the AMF 500, the SMF_E 610, the SMF 620, the PCF_E 710, the PCF_N 720, and the UDR 1100. For example, a rest of the PDU session establishment procedure may be performed in the UE 100, the AMF 500, the SMF_E 610, the SMF 620, the PCF_E 710, the PCF_N 720, and the UDR 1100.

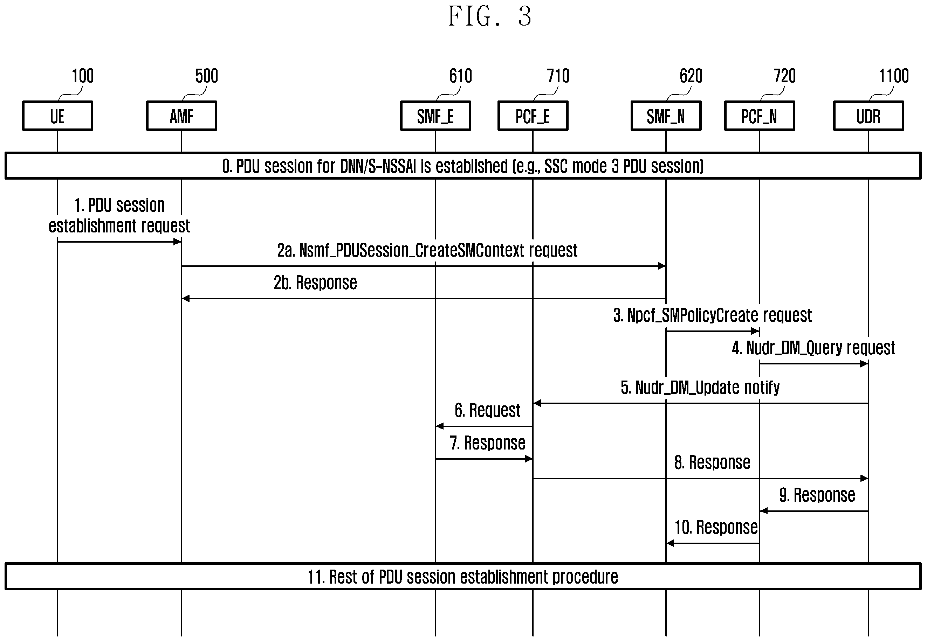

FIG. 3 is a message flow diagram illustrating an operation of requesting a data usage update to PCFs in charge of the same S-NSSAI/DNN when a UDR 1100 receives a query request for S-NSSAI/DNN in a wireless communication system 10 according to the disclosure.

With reference to FIG. 2, at step 0, among at least one of the UE 100, the AMF 500, the SMF_E 610, the SMF 620, the PCF_E 710, the PCF_N 720, or the UDR 1100, there may be one or more PDU sessions already established with a specific DNN and S-NSSAI. For example, among at least one of the UE 100, the AMF 500, the SMF_E 610, the SMF 620, the PCF_E 710, the PCF_N 720, or the UDR 1100, a PDU session for the DNN and S-NSSAI such as an SSC mode 3 PUD session may be established.

At step 1, the UE 100 may transmit a PDU session establishment request message to the AMF 500 through the RAN 200. The AMF 500 may receive the PDU session establishment request message from the UE 100 through the RAN 200. The PDU session establishment message may include S-NSSAI, DNN, and PDU session ID.

For example, in the case of an SSC mode 3 procedure (i.e., a procedure for creating a new PDU session to replace an old PDU session because a change in anchor UPF is required for the old PDU session managed by the SMF_E 610), the PDU session establishment message may include an old PDU session ID. The old PDU session ID may indicate identifier information on the existing PDU session established with the same S-NSSAI and DNN as those included in the PDU session establishment message.

At step 2a, the AMF 500 may transmit an SM context creation request message (Nsmf_PDUSession_CreateSMContext request) to the SMF_N 620. The SMF_N 620 may receive the SM context creation request message from the AMF 500. For example, the AMF 500 may select the SMF_N 610 (indicating an SMF to be in charge of the new PDU session) to be in charge of a new PDU session corresponding to S-NSSAI and DNN included in the PDU session establishment request message received at step 1. If the AMF 500 has received an old PDU session ID at step 1 and received an SMF relocation indication (i.e., information indicating that an SMF change is required) before step 1, the AMF 500 may select a new SMF_N 620 different from the SMF_E 610 in charge of a PDU session corresponding to the old PDU session ID. A PDU session creation procedure through the SMF_N 620 selected at step 2a may be performed. The AMF 500 may transmit an SM context creation request message requesting SM context creation to the SMF_N 620.

The SM context creation request message may include at least one of S-NSSAI, DNN, or UE ID (slice identifier, data network name, or UE identifier, respectively).

At step 2b, the SMF_N 620 may transmit a response message to the AMF 500. The AMF 500 may receive the response message from the SMF_N 620. The SMF_N 620 may transmit a message requesting session related subscription information to the UDM 1000 based on the UE ID received at step 2a. The UDM 1000 may receive a message requesting session related subscription information from the SMF_N 620. The UDM 1000 may transmit a response message to the message requesting session related subscription information to the SMF_N 620. The SMF_N 620 may receive a response message to the message requesting session related subscription information from the UDM 1000. The SMF_N 620 may create an SM context based on the response message and create an SM context ID.

The SMF_N 620 may transmit a response message including the result (i.e., success or failure) of the request at step 2a and the SM context ID to the AMF 500.

At step 3, the SMF_N 620 may transmit an SM policy creation request message to the PCF_N 720. The PCF_N 720 may receive the SM policy creation request message from the SMF_N 620. The SMF_N 620 may perform selection on a PCF. For example, in the case that the SM context creation request message received from the AMF 500 at step 2a includes a PCF ID or information indicating to select the same PCF for the same S-NSSAI and DNN (or in the case that the SM context creation request message is stored as preconfigured information), the SMF_N 620 may select a PCF based on the corresponding information. For example, the SMF_N 620 may select the same PCF as the PCF_E 710 (i.e., the PCF_N 720 and the PCF_E 710 are the same).

The SMF_N 620 may transmit an SM policy creation request message for SM policy creation to the selected PCF (i.e., PCF_N 720).

At step 4, the PCF_N 720 may transmit a query request message (Nudr_DM_Query request) to the UDR 1100. The UDR 1100 may receive the query request message from the PCF_N 720. The PCF_N 720 may transmit a query request message for requesting remaining allowed usage corresponding to an UE ID, DNN, and S-NSSAI included in the SM policy creation request message received at step 3 to the UDR 1100.

At step 5, the UDR 1100 may transmit an update notification message (Nudr_DM_Update Notify) to the PCF_E 710. The PCF_E 710 may receive the update notification message from the UDR 1100. The UDR 1110 may identify that the query request message received in step 4 is a message requesting remaining allowed usage for an UE ID, DNN, and S-NSSAI. In this case, the UDR 1100 may identify whether there are PCFs in which SM policy association has not been terminated (i.e., PDU sessions in charge of PDU sessions that have not yet been terminated) among other PCFs that have requested or updated remaining allowed usage values for the UE ID, DNN, and S-NSSAI included in the received query request message.

The UDR 1100 may identify whether there are PCFs in which SM policy association has not been terminated based on the message history previously transmitted and received to and from PCFs. The UDR 1100 may identify whether there are PCFs in which SM policy association has not been terminated by requesting in advance information instructing to notify the UDR 1100 when SM policy association is terminated from the PCFs. That is, although not illustrated in FIG. 3, before step 0, the UDR 1100 may transmit a subscription request message for instructing to notify itself when SM policy association for a PDU session to be monitored is terminated to the PCF_E 710 in the SM policy establishment procedure. The PCF_E 710 may receive the subscription request message from the UDR 1100. Based on the subscription request message, the PCF_E 710 may transmit a message notifying the termination of policy association when policy association is terminated to the UDR 1100.

In the case that there are PCFs in which SM policy association has not been terminated (i.e., PDU sessions in charge of PDU sessions that have not yet been terminated) among other PCFs that have requested or updated the remaining allowed usage values for the UE ID, DNN, and S-NSSAI included in the received query request message, the UDR 1100 may transmit an update notification message requesting a data usage update to the corresponding PCFs. The update notification message may include at least one of the UE ID, DNN, S-NSSAI, notification correlation information, data set identifier, or data usage update request indication (i.e., an indicator requesting a data usage update).

The notification correlation information may include identifier information for identifying communication between the UDR and the PCF. The data set identifier may include information indicating that it is data for remaining allowed usage within the PCF and the UDR.

Although not illustrated in FIG. 3, each PCF 710 that has received an update notification message from the UDR 1100 may identify PDU sessions based on information included in the update notification message, determine that it is a request for data usage update for the corresponding PDU sessions, and then request a data usage update to the SMF(s) 610 for the corresponding PDU sessions. When each PCF 710 receives a response message to the data usage update request from the SMF(s) 610, each PCF 710 may update remaining allowed usage based on aggregated usage included in the response message, and then transmit a response message to the update notification message transmitted by the UDR 1100 to the UDR 1100. The response message to an update notification message transmitted by the UDR 1100 may include at least one of remaining allowed usage, S-NSSAI, DNN, SUPI, notification correlation information, or data set identifier.

At step 6, the PCF_E 710 may transmit a request message to the SMF_E 610. The SMF_E 610 may receive the request message from the PCF_E 710. In the case that the update notification message received from the UDR 1100 at step 5 includes a data usage update request indication, the PCF_E 710 may perform a data usage update for PDU sessions corresponding to S-NSSAI and DNN identified based on information included in the update notification message received at step 5. Even in the case that the update notification message received from the UDR 1100 at step 5 does not include a data usage update request indication and specific information (e.g., remaining allowed usage), the PCF_E 710 may perform a data usage update for PDU sessions corresponding to S-NSSAI and DNN identified based on information included in the update notification message received at step 5.

In order to perform an update, the PCF_E 710 may transmit a request message requesting a data usage update to the SMF_E 610.

At step 7, the SMF_E 610 may transmit a response message to the PCF_E 710. The PCF_E 710 may receive the response message from the SMF_E 610. In response to the request message requesting a data usage update, the SMF_E 610 may transmit a response message including aggregated data usage (i.e., data usage up to now) corresponding to S-NSSAI and DNN included in the request message to the PCF_E 710.

At step 8, the PCF_E 710 may transmit a response message to the UDR 1100. The UDR 1100 may receive the response message from the PCF_E 710. In the case that aggregated data usage is included in the response message received from the SMF_E 610, the PCF_E 710 may update remaining allowed usage stored therein. The PCF_E 710 may transmit a response message including at least one of an UE ID, DNN, S-NSSAI, notification correlation information, data set identifier, aggregated data usage, or remaining allowed usage to the UDR 1100.

At step 9, the UDR 1100 may transmit a response message to the PCF_N 720. The PCF_N 720 may receive the response message from the UDR 1100. If the response message received at step 8 includes aggregated data usage and/or remaining allowed usage, the UDR 1110 may update the remaining allowed usage values corresponding to S-NSSAI and DNN included in the response message received at step 8 based on the corresponding information. If the UDR 1100 has received a query message requesting remaining allowed usage at step 4, the UDR 1100 may transmit a response message including the remaining allowed usage corresponding to the S-NSSAI, DNN, and UE ID received at step 4 to the PCF_N 720.

At step 10, the PCF_N 720 may transmit a response message to the SMF_N 620. The SMF_N 620 may receive a response message from the PCF_N 720. In the case that the PCF_N 720 receives a response message from the UDR 1100 at step 9, the PCF_N 720 may transmit a response message to the SMF_N 620 in response to the SM policy creation request message received from the SMF_N 620 at step 3. The response message may include session related policy information and data monitoring related policy information.

At step 11, a PDU session establishment procedure may be performed in the UE 100, the AMF 500, the SMF_E 610, the SMF 620, the PCF_E 710, the PCF_N 720, and the UDR 1100. For example, a rest of the PDU session establishment procedure may be performed in the UE 100, the AMF 500, the SMF _E 610, the SMF 620, the PCF_E 710, the PCF_N 720, and the UDR 1100.

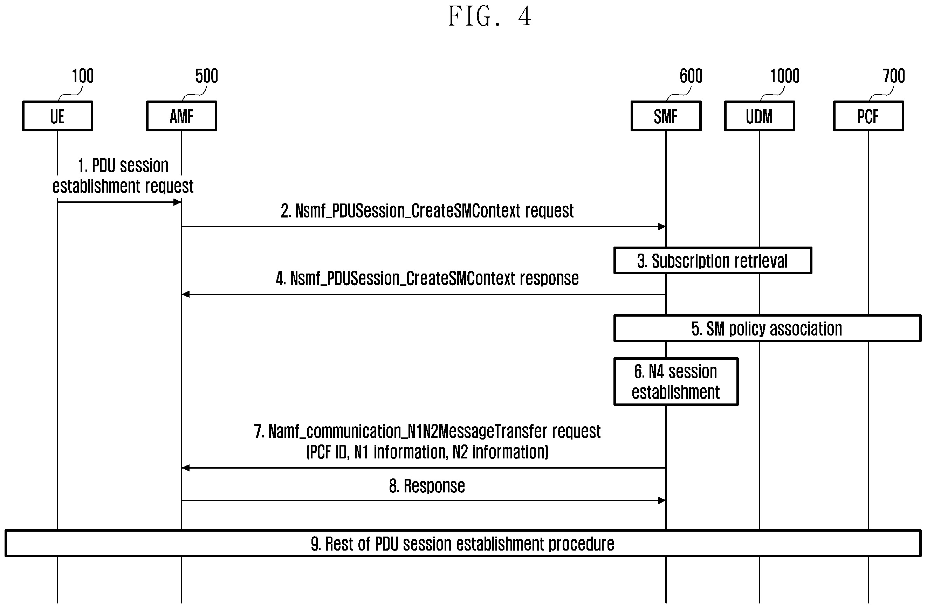

FIG. 4 is a message flow diagram illustrating an operation in which an AMF 500 stores a PCF ID in an UE context in a PDU session creation procedure in a wireless communication system 10 according to the disclosure.

With reference to FIG. 4, the SMF 600 may correspond to at least one of the SMF_E 610 or the SMF_N 620 of FIGS. 2 and 3. The PCF 700 may correspond to at least one of the PCF_E 710 or the PCF_N 720 of FIGS. 2 and 3.

At step 1, the UE 100 may transmit a PDU session establishment request message to the AMF 500 through the RAN 200. The AMF 500 may receive the PDU session establishment request message from the UE 100 through the RAN 200. The PDU session establishment message may include at least one of S-NSSAI, DNN, PDU session ID, or requested SSC mode.

The requested SSC mode may be a value representing one of an SSC mode 1, SSC mode 2, or SSC mode 3.

At step 2, the AMF 500 may transmit an SM context creation request message (Nsmf_PDUSession_CreateSMContext request) to the SMF 600. The SMF 600 may receive the SM context creation request message from the AMF 500. For example, the AMF 500 may select the SMF 600 to be in charge of a PDU session based on S-NSSAI and DNN included in the PDU session establishment request message received at step 1. A PDU session creation procedure through the SMF 600 selected at step 2 may be performed. The AMF 500 may transmit an SM context creation request message requesting SM context creation to the SMF 600.

The SM context creation request message may include the following information:

S-NSSAI, DNN, and UE ID: They may be a slice identifier, data network name, and UE identifier, respectively.

Requested SSC mode: When a requested SSC mode is received at step 1, the corresponding information may be included.

At step 3, the SMF 600 may perform a subscription retrieval operation with the UDM 1000. For example, the SMF 600 may receive subscriber information related to the session from the UDM 1000 based on the UE ID included in the SM context creation request message received at step 2. The subscriber information may include a subscribed SSC mode for the UE ID.

At step 4, the SMF 600 may transmit a SM context creation response message (Nsmf_PDUSession_CreateSMContext response) to the AMF 500. The AMF 500 may receive the SM context creation response message from the SMF 600. The SMF 600 may create an SM context and an SM context ID based on the information received from the UDM 1000 at step 3. The SM context may include an allowed SSC mode based on the subscribed SSC mode and the requested SSC mode. In response to step 2, the SMF 600 transmits an SM context creation response message including the SM context ID and the result (i.e., success or failure) of the request at step 2.

At step 5, the SMF 600 may perform an SM policy association procedure together with the UDM 1000 and the PCF 700. The SMF 600 may select the PCF 700 for an SM policy creation request and transmit an SM policy creation request message to the selected PCF 700. The PCF 700 may receive the SM policy creation request message from the SMF 600. The PCF 700 may create a policy for the session (i.e., SM policy) based on the SM policy creation request message. The PCF 700 may transmit a response message including policy information on the session to the SMF 600.

In the case that the corresponding PDU session (or S-NSSAI and DNN) in which establishment is requested is a monitoring target, the PCF 700 may transmit a response message including policy information for data usage monitoring (e.g., traffic to be monitored, monitoring report cycle) to the SMF 600. The SMF 600 may receive the response message from the PCF 700.

At step 6, the SMF 600 may perform an N4 session establishment operation. For example, the SMF 600 may create an N4 session with the UPF 300 based on the S-NSSAI and DNN.

At step 7, the SMF 600 may transmit an N1N2 message transfer request message (Namf_Communication_N1N2MessageTransfer request) to the AMF 500. The AMF 500 may receive the N1N2 message transfer request message from the SMF 600. The SMF 600 may transmit an N1N2 message transfer request message including information (i.e., N1 information) to be transferred to the UE for the session and information (N2 information) to be transferred to the base station to the AMF 500.

The N1N2 message may include a PCF ID of the PCF 700 selected at step 5. In this case, in the case that the corresponding PDU session in which establishment is requested is a PDU session to be monitored, the SMF 600 may include a PCF ID in the N1N2 message. For example, in the case that the SMF 600 receives policy information for monitoring at step 5, the SMF 600 may identify whether the corresponding PDU session in which establishment is requested is a PDU session to be monitored based on the policy information. Alternatively, in the case that the corresponding PDU session in which establishment is requested is a PDU session to be monitored and is a PDU session corresponding to an SSC mode 3, the SMF 600 may include a PCF ID in the N1N2 message.

At step 8, the AMF 500 may transmit a response message to the SMF 600. The SMF 600 may receive the response message from the AMF 500. When a PCF ID is included in N1N2 message transfer request message received at step 7, the AMF 500 may store the PCF ID as information on S-NSSAI, DNN, and PDU session ID in UE context information on the UE 100 (i.e., UE ID).

The AMF 500 may transmit a response message to the SMF 600 in response to the N1N2 message transfer request message received from the SMF 600 at step 7.

At step 9, a PDU session establishment procedure may be performed between the UE 100, the AMF 500, the SMF 600, the PCF 700, and the UDM 1000. For example, a rest of the PDU session establishment procedure may be performed in the UE 100, the AMF 500, the SMF 600, the PCF 700, and the UDM 1000.

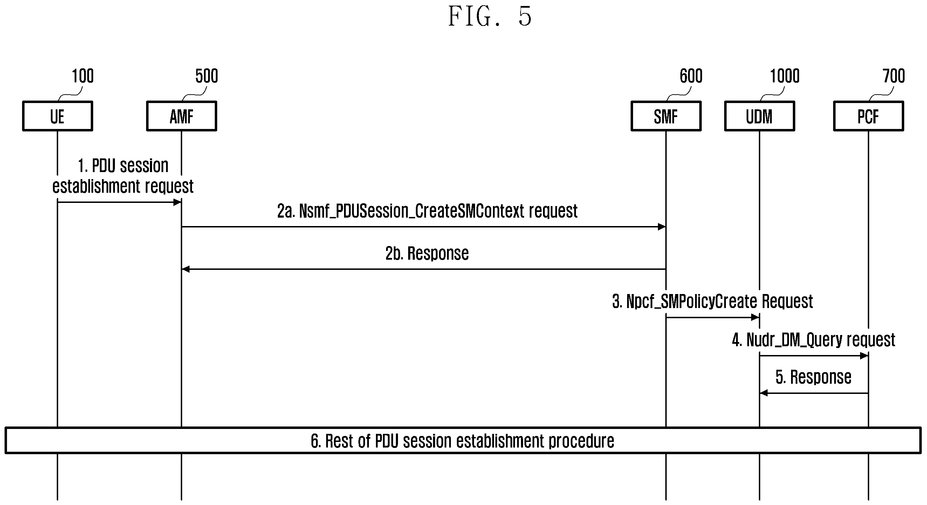

FIG. 5 is a message flow diagram illustrating a method of selecting the same PCF 700 for S-NSSAI/DNN based on information received from the AMF 500 by the SMF 600 in a PDU session creation procedure in a wireless communication system 10 according to the disclosure.

With reference to FIG. 5, the SMF 600 may correspond to at least one of the SMF_E 610 or the SMF_N 620 of FIGS. 2 and 3. The PCF 700 may correspond to at least one of the PCF_E 710 or the PCF_N 720 of FIGS. 2 and 3.

At step 1, the UE 100 may transmit a PDU session establishment request message to the AMF 500 through the RAN 200. The AMF 500 may receive the PDU session establishment request message from the UE 100 through the RAN 200. The PDU session establishment request message may include at least one of S-NSSAI, DNN, or PDU session ID.

In the case of an SSC mode 3 procedure (i.e., a procedure for creating a new PDU session to replace an old PDU session because a change of the anchor UPF 300 is required for an old PDU session managed by the SMF_E 610), an old PDU session ID may be included. The old PDU session ID indicates identifier information on the existing PDU session established with the same S-NSSAI and DNN as those included in the PDU session establishment request message.

At step 2a, the AMF 500 may transmit an SM context creation request message to the SMF 600. The SMF 600 may receive the SM context creation request message from the AMF 500. The AMF 500 may select an SMF 600 to be in charge of a new PDU session corresponding to the S-NSSAI and DNN included in the PDU session establishment request message received at step 1. When the AMF 500 has received an old PDU session ID at step 1 and received an SMF relocation indication (i.e., information indicating that an SMF change is required) before step 1, the AMF 500 may select a new SMF 600 different from the SMF_E 610 in charge of the PDU session corresponding to the old PDU session ID.

In the case that the AMF 500 has received an SMF relocation indication (i.e., information indicating that an SMF change is required) before step 1, and that there is the existing PDU session corresponding to S-NSSAI and DNN received at step 1 in the UE context information, the AMF 500 may transmit an SM context creation request message including a PCF ID corresponding to the PCF 700 to the SMF 600 so that the same PCF 700 as the PCF in charge of the existing PDU session may be selected when selecting a PCF for a new PDU session.

In the case that the PCF ID is stored in information for each session within the UE context, the AMF 500 may utilize the information.

If a PCF ID for a PDU session in the UE context is not stored, the AMF 500 may receive a PCF ID through the NRF 1600 or receive a PCF ID through the SMF 600 for the corresponding PDU session.

In the case of receiving a PCF ID through the NRF 1600 or the SMF 600, a request message transmitted from the AMF 500 to the NRF 1600 and the SMF 600 may include a PDU session ID, SM context ID or UE ID, S-NSSAI, and DNN.

The NRF 1600 or the SMF 600 may identify a PCF ID based on information included in a message received from the SMF 600 and transmit a response message including the identified PCF ID to the SMF 600.

The AMF 500 may transmit an SM context request message requesting SM context creation to the selected SMF 600. The SM context message may include at least one of the following information:

S-NSSAI, DNN, and UE ID: They may include a slice identifier, data network name, and UE identifier, respectively.

PCF ID: The SM context message may include a PCF ID for the existing PDU session for S-NSSAI and DNN.

At step 2b, the SMF 600 may transmit a response message to the AMF 500. The AMF 500 may receive the response message from the SMF 600. The SMF 600 may request and receive session related subscription information to and from the UDM 1000 based on the UE ID received at step 2a. The SMF 600 may create an SM context and an SM context ID based on the session related subscription information received from the UDM 1000.

The SMF 600 may transmit a response message including the result (i.e., success or failure) of the request at step 2a and an SM context ID to the AMF 500.

At step 3, the SMF 600 may transmit a policy creation request message (Npcf_SMPolicyCreate Request) to the PCF 700. The PCF 700 may receive the policy creation request message from the SMF 600. The SMF 600 may perform an operation for selecting the PCF 700. In the case that the SM context creation request message received from the AMF 500 at step 2a includes a PCF ID or information indicating to select the same PCF for the same S-NSSAI and DNN (or in the case that the SM context creation request message is stored as preconfigured information), the SMF 600 may select the PCF 700 based on the information (i.e., in the case that the PCF ID is included, the SMF 600 may select the PCF corresponding to the PCF ID).

In the case that the SM context creation request message received at step 2a includes a PCF ID, the SMF 600 may transmit an SM policy creation request message including PDU session exist (i.e., information indicating that the existing PDU session exists) to the PCF 700.

In the case that the SM context creation request message transmitted from the AMF 500 to the SMF 600 at step 2a includes an SM policy association ID, the PDU session exist may include the SM policy association ID.

For example, the SMF 600 may transmit a policy creation request message including at least one of an UE ID, DNN, S-NSSAI, or PDU session exist to the PCF 700.

At step 4, the PCF 700 may transmit a query request message (Nudr_DM_Query request) to the UDR 1100. The UDR 1100 may receive the query request message from the PCF 700. In the case that the policy creation request message received at step 3 includes PDU session exist, but does not include an SM policy association ID, the PCF 700 may identify the existing PDU sessions corresponding to DNN and S-NSSAI included in the policy creation request message received at step 3 and transmit a message requesting to perform a data usage update to SMFs in charge of the identified PDU sessions.

In the case that the policy creation request message received at step 3 includes PDU session exist and SM policy association ID(s), the PCF 700 may identify the existing PDU session(s) corresponding to the SM policy association ID(s) and transmit a message requesting to perform a data usage update to the SMF(s) in charge of the identified PDU session(s).

Even if the policy creation request message received at step 3 does not include PDU session exist, the PCF 700 may identify existing PDU sessions corresponding to the DNN and S-NSSAI included in the policy creation message received at step 3 and transmit a message requesting to perform a data usage update to SMFs in charge of the identified PDU sessions.

The PCF 700 determines that a data usage update is required, and when the corresponding update is completed, the PCF 700 may transmit a query request message for receiving remaining allowed usage corresponding to the UE ID, DNN, and S-NSSAI included in the SM policy creation request message received at step 3 to the UDR 1100.

At step 5, the UDR 1100 may transmit a response message to the PCF 700. The PCF 700 may receive a response message from the UDR 1100. The UDR 1100 may identify that the query request message received at step 4 is a message requesting remaining allowed usage for an UE ID, DNN, and S-NSSAI. The UDR 1100 may transmit a response message including a remaining allowed usage value to the PCF 700.

The disclosure relates to a 5G or 6G communication system for supporting higher data rates.

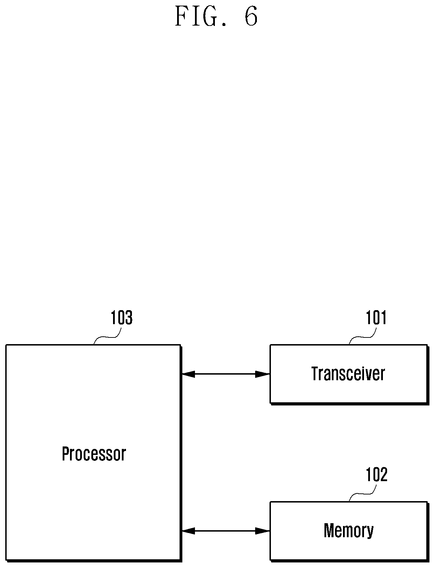

FIG. 6 is a block diagram illustrating a UE 100 in a wireless communication system 10 according to the disclosure.

As illustrated in FIG. 6, the UE 100 of the disclosure may include a transceiver 101, a memory 102, and a processor 103. The processor 103, the transceiver 101, and the memory 102 of the UE 100 may operate according to the communication method of the UE 100 described above. However, the components of the UE 100 are not limited to the above-described examples. For example, the UE 100 may include more or fewer components than the above-described components. Further, the processor 103, the transceiver 101, and the memory 102 may be implemented in the form of a single chip.

The transceiver 101 is a general term for a receiver of the UE 100 and a transmitter of the UE 100, and may transmit and receive signals to and from the base station 200 or network entities 200, 300, 400, 500, 600, 700, 800, 900, 1000, 1100, 1500, 1600, and 1700. The signals transmitted and received to and from the base station 200 may include control information and data. To this end, the transceiver 101 may be composed of an RF transmitter that up-converts and amplifies a frequency of a signal to be transmitted, and an RF receiver that low-noise amplifies a received signal and that down-converts a frequency thereof. However, this is only an embodiment of the transceiver 101, and the components of the transceiver 100 are not limited to the RF transmitter and the RF receiver.

Further, the transceiver 101 may include a wired or wireless transceiver and include various components for transmitting and receiving signals.

Further, the transceiver 101 may receive a signal through a wireless channel and output the signal to the processor 730, and transmit a signal output from the processor 103 through the wireless channel.

Further, the transceiver 101 may receive a communication signal and output it to the processor, and transmit the signal output from the processor to the network entity through a wired or wireless network.

The memory 102 may store programs and data required for the operation of the UE 100. Further, the memory 102 may store control information or data included in a signal acquired from the UE. The memory 102 may include storage media such as a read only memory (ROM), a random access memory (RAM), a hard disk, a compact disc read-only memory (CD-ROM), and a digital versatile disc (DVD), or a combination of storage media.

The processor 103 may control a series of processes so that the UE 100 may operate according to the foregoing embodiment of the disclosure. The processor 103 may include at least one processor. For example, the processor 103 may include a communication processor (CP) that performs the control for communication and an application processor (AP) that controls upper layers such as application programs.

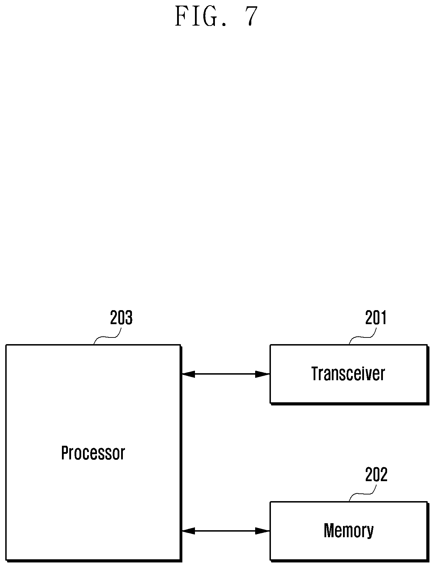

FIG. 7 is a block diagram illustrating network entities 200, 300, 400, 500, 600, 700, 800, 900, 1000, 1100, 1500, 1600, and 1700 in a wireless communication system 10 according to the disclosure.

As illustrated in FIG. 7, the network entities 200, 300, 400, 500, 600, 700, 800, 900, 1000, 1100, 1500, 1600, and 1700 of the disclosure may include a transceiver 201, a memory 202, and a processor 203. According to a communication method of the network entities 200, 300, 400, 500, 600, 700, 800, 900, 1000, 1100, 1500, 1600, and 1700 described above, the processor 203, the transceiver 201, and the memory 202 of the network entities 200, 300, 400, 500, 600, 700, 800, 900, 1000, 1100, 1500, 1600, and 1700 may operate. However, components of the network entities 200, 300, 400, 500, 600, 700, 800, 900, 1000, 1100, 1500, 1600, and 1700 are not limited to the above-described examples. For example, the network entities 200, 300, 400, 500, 600, 700, 800, 900, 1000, 1100, 1500, 1600, and 1700 may include more or fewer components than the above-described components. Further, the processor 203, the transceiver 201, and the memory 202 may be implemented in the form of a single chip.

The transceiver 201 is a general term for a receiver of the network entities 200, 300, 400, 500, 600, 700, 800, 900, 1000, 1100, 1500, 1600, and 1700 and a transmitter of the network entities 200, 300, 400, 500, 600, 700, 800, 900, 1000, 1100, 1500, 1600, and 1700 and may transmit and receive signals to and from the UE 100 or another network entity. In this case, the transmitted and received signals may include control information and data. To this end, the transceiver 201 may be composed of an RF transmitter that up-converts and amplifies a frequency of a signal to be transmitted, and an RF receiver that low-noise amplifies a received signal and that down-converts a frequency thereof. However, this is only an embodiment of the transceiver 201, and the components of the transceiver 201 are not limited to the RF transmitter and the RF receiver. The transceiver 201 may include a wired or wireless transceiver, and include various components for transmitting and receiving signals.

Further, the transceiver 201 may receive a signal through a communication channel (e.g., wireless channel) and output the signal to the processor 203, and transmit a signal output from the processor 203 through the communication channel.

Further, the transceiver 201 may receive a communication signal and output it to the processor, and transmit the signal output from the processor to the UE 100 or another network entity through a wired or wireless network.

The memory 202 may store programs and data required for the operation of the network entities 200, 300, 400, 500, 600, 700, 800, 900, 1000, 1100, 1500, 1600, and 1700. Further, the memory 202 may store control information or data included in a signal acquired from the network entities 200, 300, 400, 500, 600, 700, 800, 900, 1000, 1100, 1500, 1600, and 1700. The memory 202 may be composed of storage media such as a ROM, a RAM, a hard disk, a CD-ROM, and a DVD or a combination of storage media.

The processor 203 may control a series of processes so that the network entities 200, 300, 400, 500, 600, 700, 800, 900, 1000, 1100, 1500, 1600, and 1700 may operate according to the foregoing embodiments of the disclosure. The processor 203 may include at least one processor. Methods according to the embodiments described in the claims or specification of the disclosure may be implemented in the form of hardware, software, or a combination of hardware and software.

### [Industrial applicability]

The disclosure may be used in the electronics industry and the information and communication industry.

## Claims

1. A method of operating a first session management function (SMF) in a wireless communication system, the method comprising:
receiving, from an access and mobility management function (AMF), an SM context creation request message;
transmitting, to a first policy control function (PCF), a policy creation request message based on the SM context creation request message; and
receiving, from the first PCF, a first response message to the policy creation request message.

2. The method of claim 1, wherein the SM context creation request message is generated based on the first response message transmitted from a second SMF to the AMF, and
the first response message comprises information indicating whether an update on data usage of the terminal has been completed in the second SMF.

3. The method of claim 2, wherein the first response message is generated based on a second response message transmitted from a second PCF to the second SMF, and
the second response message comprises information indicating whether an update on data usage of the terminal has been completed in the second PCF.

4. The method of claim 3, wherein the second response message is generated based on a third response message transmitted from a unified data repository (UDR) to the second PCF, and
the third response message comprises information indicating whether an update on data usage of the terminal has been completed in the UDR.

5. The method of claim 4, wherein the third response message is generated based on an update request message transmitted from the second PCF to the UDR, and
the update request message comprises information instructing to update data usage of the terminal.

6. The method of claim 5, wherein the update request message is generated based on a policy update request message transmitted from the second SMF to the second PCF, and
the policy update request message comprises information instructing to update data usage of the terminal.

7. The method of claim 6, wherein the policy update request message is generated based on an SM context update request message transmitted from the AMF to the second SMF, and
the SM context update request message comprises at least one of S-NSSAI, DNN, report indication, per S-NSSAI/DNN report indication, PDU session ID, or SM context ID.

8. The method of claim 7, wherein the SM context request message is generated based on a PDU session establishment request message transmitted from the terminal to the AMF, and
the PDU session establishment request message comprises at least one of S-NSSAI, DNN, or PDU session ID.

9. The method of claim 1, wherein the first response message is generated based on a fourth response message transmitted from a UDR to the first PCF, and the fourth response message comprises at least one of remaining allowed usage corresponding to an UE ID, DNN, and S-NSSAI.

10. The method of claim 9, wherein the fourth response message is generated based on a query request message transmitted from the first PCF to the UDR, and
the query request message is generated based on the policy creation request message.

11. A first session management function (SMF) in a wireless communication system, the first SMF comprising:
a transceiver; and
a processor coupled to the transceiver,
wherein the processor is configured to:
receive, from an access and mobility management function (AMF), an SM context creation request message,
transmit, to a first policy control function (PCF), a policy creation request message based on the SM context creation request message, and
receive, from the first PCF, a first response message to the policy creation request message.

12. The first SMF of claim 11, wherein the SM context creation request message is generated based on a first response message transmitted from a second SMF to the AMF, and
the first response message comprises information indicating whether an update on data usage of the terminal has been completed in the second SMF.

13. The first SMF of claim 12, wherein the first response message is generated based on a second response message transmitted from a second PCF to the second SMF, and
the second response message comprises information indicating whether an update on data usage of the terminal has been completed in the second PCF.

14. The first SMF of claim 13, wherein the second response message is generated based on a third response message transmitted from a UDR to the second PCF, and
the third response message comprises information indicating whether an update on data usage of the terminal has been completed in the UDR.

15. The first SMF of claim 14, wherein the third response message is generated based on an update request message transmitted from the second PCF to the UDR, and
the update request message comprises information instructing to update data usage of the terminal.
